# EUROPEAN PATENT APPLICATION

(11) **EP 4 723 008 A1**
(43) Date of publication of application: **08.04.2026**
(21) Application number: 24222450.9
(22) Date of filing: 20.12.2024
(51) Int. Cl.: G06Q 10/087, B65G 1/137, B65G 1/04, G01S 5/02, G01S 5/14, G01S 5/16, G01S 13/74

(54) **LOCATION MONITORING SYSTEM AND METHOD OF ROBOTIC VEHICLES IN AN AUTOMATED STORAGE AND RETRIEVAL SYSTEM**

(30) Priority: 07.10.2024 US 202463704175 P
(71) Applicant: AutoStore Technology AS, 5578 Nedre Vats (NO)
(72) Inventor: JOSHI, Parth, 5578 Nedre Vats (NO); FJELDHEIM, Ivar, 5578 Nedre Vats (NO)
(74) Representative: Kilburn & Strode LLP

(57) **Abstract**

The disclosure relates to a location monitoring system for monitoring the location of one or more robotic vehicles (122) in an automated storage and retrieval system comprising a grid (100) on which the robotic vehicles move. The location monitoring system comprises a first communication module (502) configured to be positioned on or in a robotic vehicle, and a plurality of second communication modules (504) configured to be arranged at fixed positions relative to the automated storage and retrieval system and displaced from the grid by a displacement that is greater than or equal to a maximum projection of the robotic vehicles from the grid. The first communication module and the second communication modules are configured such that signals are communicated therebetween. A location determining module (506) determines a location of the robotic vehicle based on the signals communicated between the first communication module and the second communication modules.

## Description

### TECHNICAL FIELD

The disclosure relates to location monitoring. More particularly, it relates to location monitoring systems and methods in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

A control system can control movement of the robotic container-handling vehicles in the automated storage and retrieval system. In some cases robots can become lost or positioned at unexpected locations in the system; this risks the robotic container-handling vehicle arriving at an incorrect location for storing or retrieving goods, and also risks collisions between robots when a robot is at an unexpected location.

### SUMMARY

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a diagram of an exemplary location monitoring system;
Fig. 6 shows a top-down view of determining a location by trilateration;
Fig. 7 shows a top-down view of determining a location by bilateration;
Fig. 8A shows an exemplary side-view diagram of a communication module arranged on a lighting system above a grid.
Fig. 8B shows an exemplary side-view diagram of a communication module arranged on a sidewall of an automated storage and retrieval system; and
Fig. 9 is a flow chart illustrating an exemplary method of location determination.

### DETAILED DESCRIPTION

In overview, the disclosure relates to a location monitoring system for monitoring the location of one or more robotic vehicles in an automated storage and retrieval system that comprises a grid on which the one or more robotic vehicles move. The location monitoring system comprises a first communication module configured to be positioned on or in a robotic vehicle of the one or more robotic vehicles. The location monitoring system also comprises a plurality of second communication modules configured to be arranged at fixed positions relative to the automated storage and retrieval system and displaced from the grid by a displacement that is greater than or equal to a maximum projection of the one or more robotic vehicles from the grid. The first communication module and the second communication modules are configured such that signals are communicated between the first communication module and the second communication modules. The location monitoring system further comprises a location determining module configured to determine a location of the robotic vehicle based on the signals communicated between the first communication module and the second communication modules. In this way, real-time monitoring of the location of robotic vehicles in the system can be achieved. Moreover, displacing the second communication modules from the grid by a displacement that is greater than or equal to a maximum projection of the one or more robotic vehicles from the grid helps to ensure a clear line of sight between the first communication module and the second communication modules. In this way, the communication between the first communication module and the second communication modules can be improved, resulting in determined locations that are more accurate and reliable.

### Automated storage and retrieval system overview

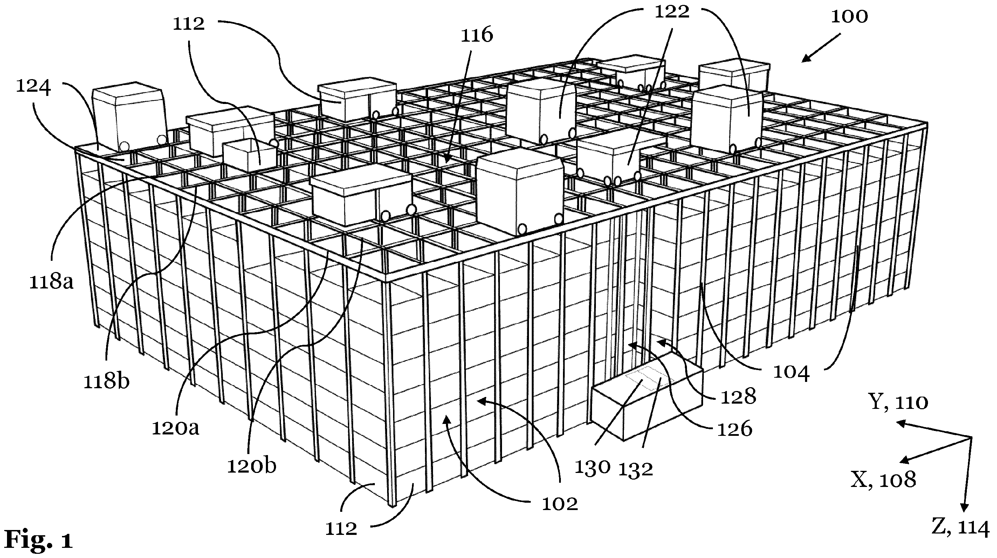

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

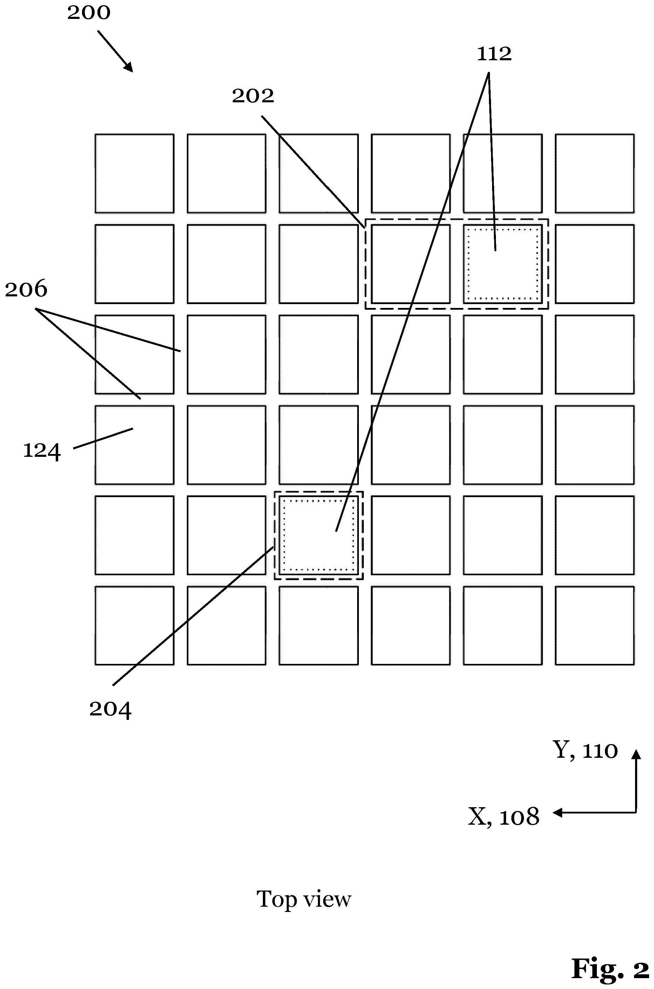

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

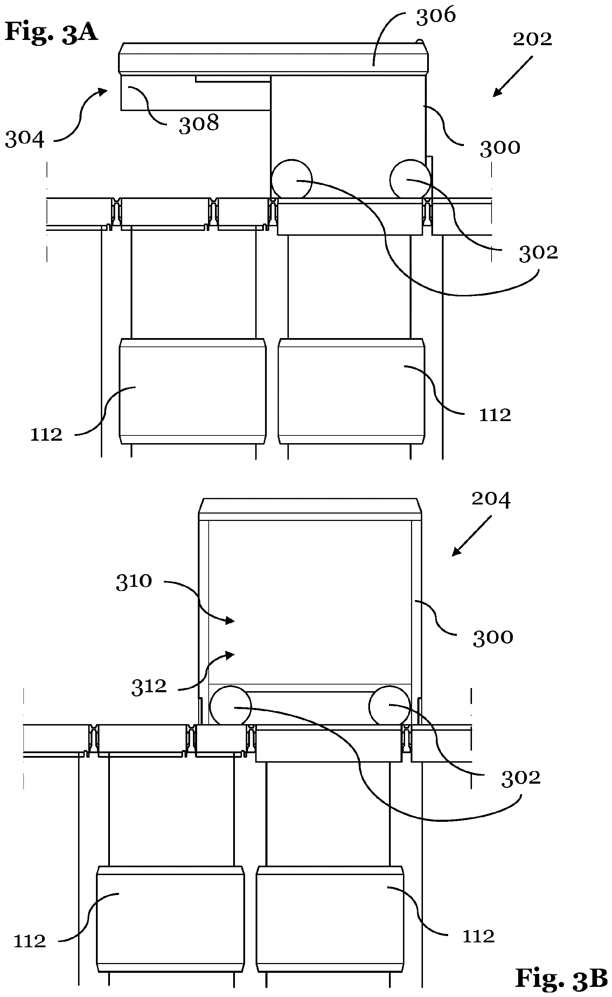

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, `internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

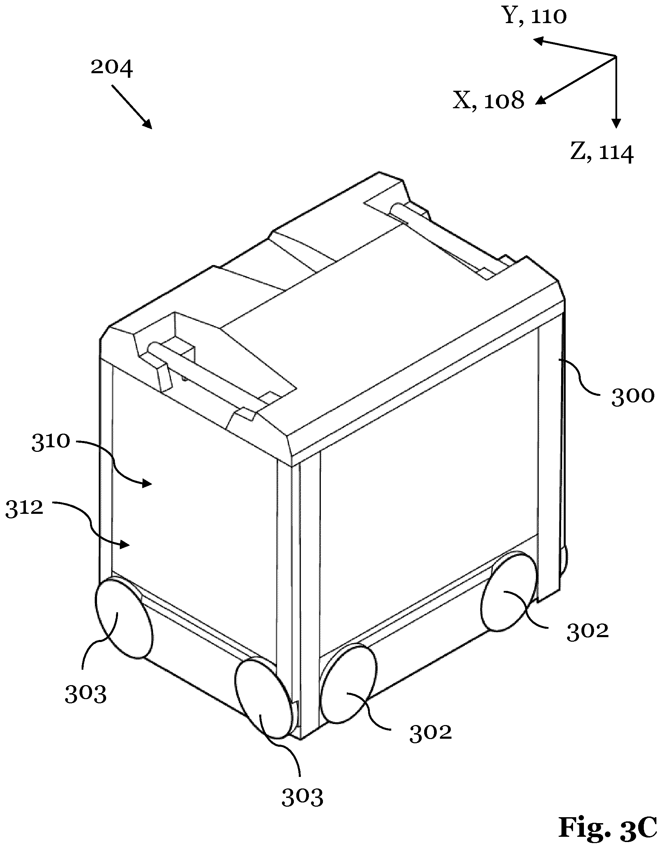

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

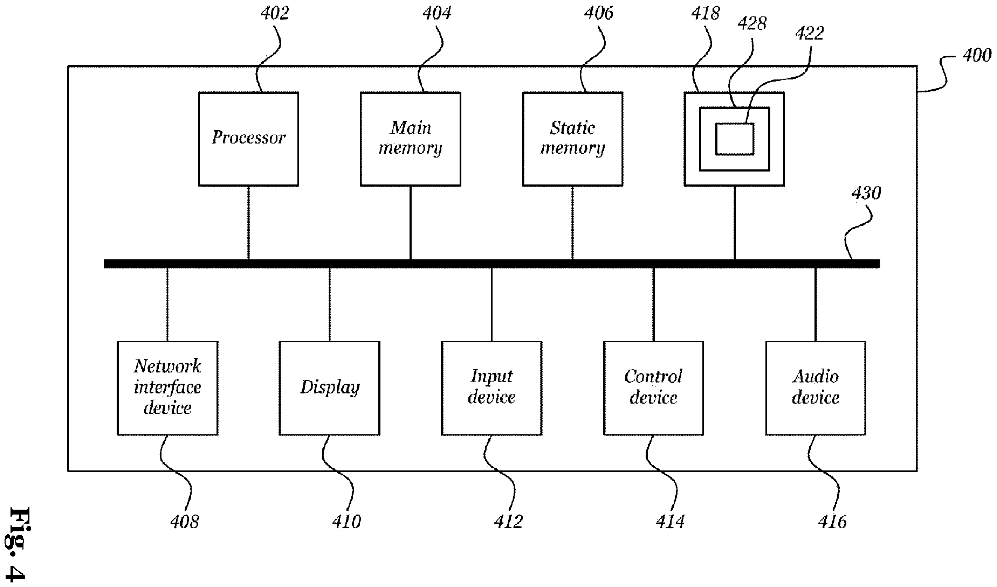

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term `computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Location Monitoring

In existing approaches to monitoring the location of robotic container-handling vehicles (hereinafter referred to as robots, for brevity) location monitoring can be brought about by initially positioning the robot at a known location. An instruction is sent to the robot to travel to a new location. For example, the robot can be instructed to move a first predetermined distance (or number of cells, in the case of a grid) forward, and then a second predetermined distance left of right. The control system can then assume that the robot is at the expected location to which it was directed by the instructions. The robot can monitor whether it has moved the predetermined distances by, for example, counting the number of cells it has traversed. However, complications can arise if, for example, the robot miscounts the number of cells it has traversed, has overrun or stopped short of the desired location when stopping, or if an operator has placed the robot in the wrong cell to begin with. Such complications can lead to the robot not being located at the expected location. In some cases, a robot being in an unexpected location can lead to the robot being at an incorrect location for storing and/or retrieving items thereby reducing system efficiency, or in some cases crashes between robots. It will be understood that the aforementioned complications in robots becoming lost (i.e., not at expected locations) is not limited to the aforementioned existing approach for monitoring robot locations, and other existing approaches to monitoring locations of robots in automated storage and retrieval system can face similar complications.

A location monitoring system is provided in the present disclosure to enhance the location monitoring of robots in an automated storage and retrieval system.

The location monitoring system can be used for monitoring the location of one or more robots in the automated storage and retrieval system. The provided location monitoring system can be used as a primary source of robot location determination. Alternatively or additionally, the provided location monitoring system can be used to verify whether robots are at the expected location to which the robot has been instructed to travel. When a robot is not at its expected location, the determined location can be used to update the known location of the robot in the automated storage and retrieval system. This enhanced location determination can help to inhibit robots becoming lost in the automated storage and retrieval system, and/or minimise robots being in positioned in unexpected locations, thereby inhibiting arrival at incorrect locations and crashes between robots due to robots being positioned in unexpected locations.

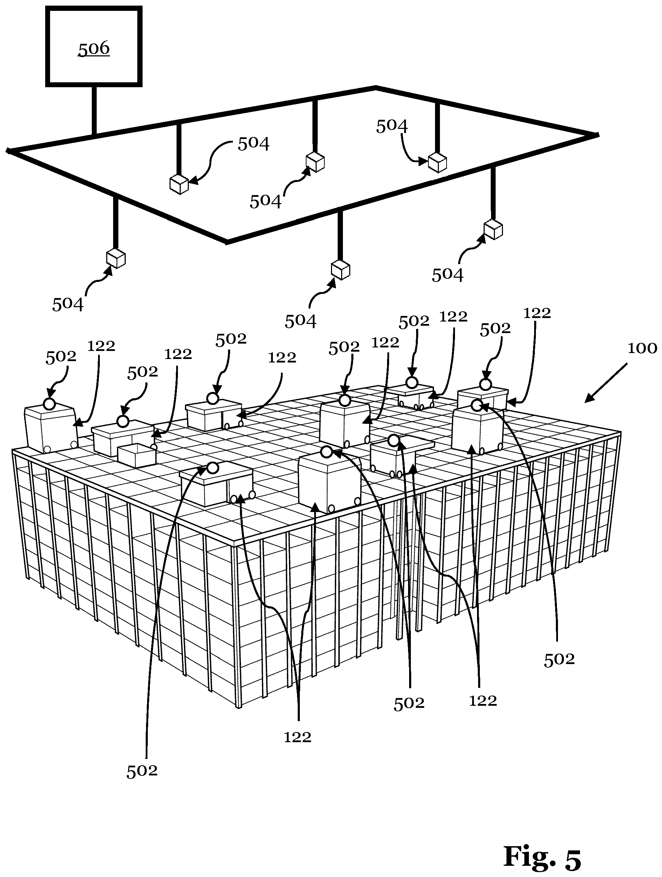

A diagram of an example of such a location monitoring system is depicted in Fig. 5. The location monitoring system comprises a first communication module 502 that is positioned on or in a robot 122 of the automated storage and retrieval system. Fig. 5 shows multiple robots 122 each with a first communication module 502; in some examples all robots in the automated storage and retrieval system can have a first communication module, in other examples only some of the robots in the automated storage and retrieval system may have a first communication module, in yet further examples there may be only one robot in the system and this robot has a first communication module. In the example of Fig. 5, the first communication module 502 is arranged on an external side of the robot 122, and in particular a top side or roof. Arranging the first communication module 502 on the top side or roof of the robot can contribute to providing a clear line of sight to second communication modules (discussed subsequently), thereby providing improved communication therebetween for location determining purposes. It will be understood, however, that the first communication module can instead be arranged on any external side or within the robot 122.

A plurality of second communication modules 504 are arranged at fixed positions relative to the automated storage and retrieval system. The second communication modules are displaced from the grid 100 by a displacement that is greater than or equal to a maximum projection of the one or more robots from the grid. In other words, in this example, the second communication modules 504 are further from the grid 100 than the top surface of each of the robots 122. In this way, the second communication modules 504 have a substantially clear line of sight to the first communication module 502 on/in a robot 122. In Fig. 5 there are six second communication modules 504; however, it will be understood that more generally there is a plurality of second communication modules and there can be more or less than the six shown.

For location determining, the first communication module 502 and a plurality of the second communication modules 504 are configured such that signals are communicated between the first communication module 502 and the second communication modules 504.

The location monitoring system further comprises a location determining module 506 configured to determine a location of a robot 122 based on the signals communicated between the first communication module 502 of the robot 122 and the plurality of second communication modules 504.

In the example of Fig. 5, the location determining module 506 is connected to the second communication modules 504. In this arrangement, the connection between the location determining module 506 and the second communication modules 504 can be a wired or wireless connection. The location determining module 506 can be a discrete module, such as a microprocessor or the like. The location determining module 506 can be communicatively coupled (by a wired or wireless connection) to the control system (as described with reference to Fig. 4) of the automated storage and retrieval system. In this way, the location of the robot 122 as determined by the location determining module 506 can be communicated to the control system to verify/update the location of the robot 122 in the automated storage and retrieval system. This real-time monitoring of the location of the robot in the automated storage and retrieval system can reduce the likelihood of the robot becoming lost or in an incorrect position, and reduce the likelihood of arrival at incorrect locations as well as crashes between robots. In an alternative arrangement, the location determining module 506 can itself be a module of the control system, rather than a separate module in communication with the control system. In such an example, the second communication modules can be in communication with the control system.

In the example of Fig. 5, the location determining module 506 is connected to the second communication modules 504. However, in an alternative, the location determining module 506 can instead be connected to the first communication module 502. In such an example, the location determining module 506 can be located at the robot 122, or separate from but in communication with the robot 122. In such arrangements, the location determining module 506 can then transmit the determined location to the control system of the automated storage and retrieval system.

The location determining module 506 need not be physically located at or with either of the first communication module 502 or the second communication modules 504. In some examples, the location determining module can be separate to both the first communication module 502 and the second communication modules 504, and configured to receive location determining information from the first communication module 502 or the second communication module 504 by a wired or wireless connection.

In a first location determining approach, the first communication module 502 can be configured to transmit signals to the second communication modules 504. That is, first communication module 502 can be a transmitter and the second communication modules can be receivers 504.

Typically, in such an arrangement, the location determining module 506 can be communicatively coupled to the second communication modules 504 and configured to determine the location of the robot 122 based upon the signals received at the second communication modules 504. In some such examples, the location determining module 506 can be a separate component, or a component of the control system of the automated storage and retrieval system.

A signal can be communicated from the first communication module 502 to the second communication modules 504.

The signal can be received at a plurality of the second communication modules 504.

The location determining module 506, communicatively coupled to the second communication modules 504, can then receive these signals and/or information based on these signals from the second communication modules 504, and then use information based on these received signals to determine the location of the first communication module 502 and therefore the location of the robot 122.

This signal can be unique to the robot 122 and, when there are multiple robots in the automated storage and retrieval system, it can be determined from which robot the signal was sent.

For each second communication module 504 that receives the signal, a distance between the respective second communication module 504 and the first communication module 502 can be determined, based upon the signal. For example, this can be brought about using received signal strength indicator (RSSI) information of the communicated signal.

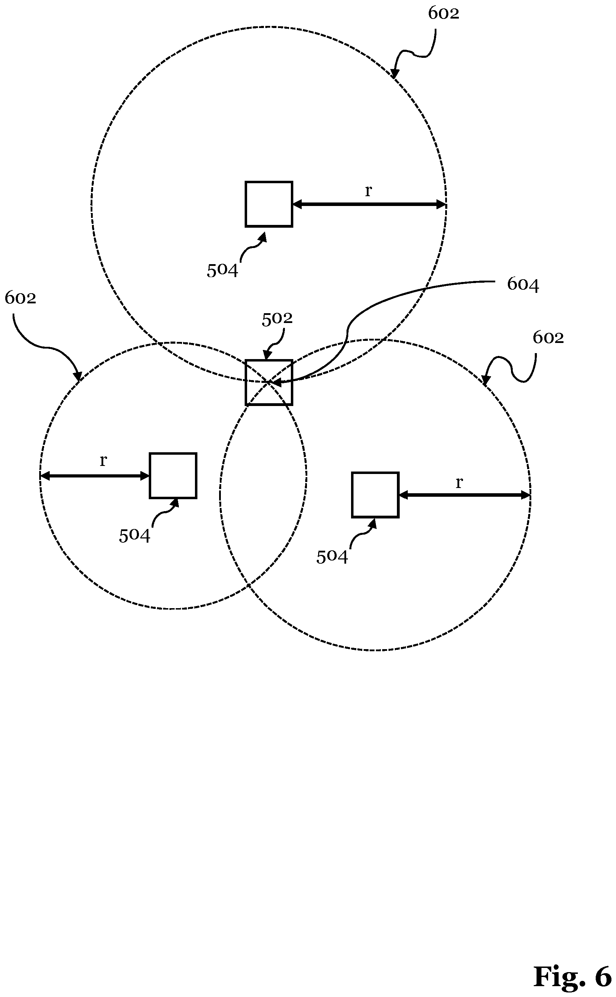

In an example, illustrated by the top-down view of Fig. 6, the signal transmitted by the first communication module 502 can be received by three second communication modules 504. In this example, trilateration can be used to determine the location of the first communication module 502 relative to the fixed positions of the second communication modules 504. As discussed, the location determining module 506 can determine a distance between each second communication module 504 and the first communication module 502. Consequently, it can be determined that the first communication module 502 is located at a point on a circle/sphere 602 around each second communication module 504, wherein the circle/sphere has a radius r that corresponds to the determined distance of the first communication module 502 from the respective second communication module 504. In combination with the known fixed displacement of the second communication modules 504 above the first communication module 502, the location 604 at which all of these circles/spheres 602 overlap can then be determined as the location of the first communication module 502. Whilst this has been discussed with regard to three second communication modules 504, it will be understood that the same principle can also be applied for more than three second communication modules 504 receiving the signal from the first communication module 502.

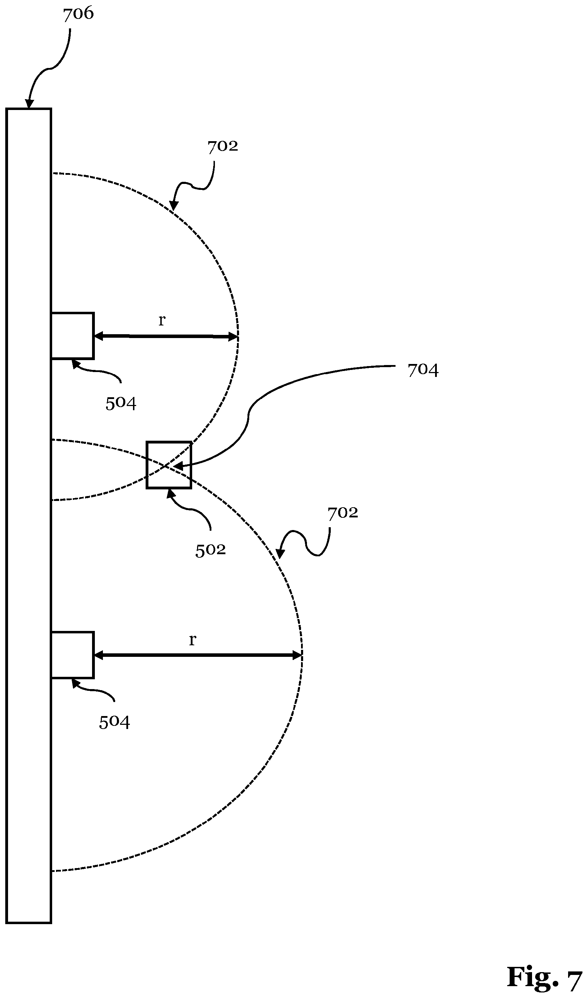

In a variation to the example of the top-down view of Fig. 6, the location determining module can also determine the location of the first communication module 502 based upon two second communication modules 504 respectively receiving the signals. This is illustrated in Fig. 7. In this example, bilateration can be used to determine the location of the first communication module 502 relative to the fixed positions of the second communication modules 504. When using only two second communication modules 504, a plane can be perceived on which the two second communication modules 504 are located. If the location determining module 506 is aware which side of the this conceptual plane the first communication module 502 is positioned, the location can be determined using only two second communication modules 504. This can be physically realised if, for example, the two second communication modules 504 are positioned on a wall, and the first communication module 502 can only be on one side of the wall. Fig. 7 illustrates such an arrangement. The two second communication modules 504 are arranged on a wall 706.

The location determining module 506 can determine a distance between each second communication module 504 and the first communication module 502. Consequently, it can be determined that the first communication module 502 is located at a point on a semicircle/half-sphere 702 around each second communication module 504, wherein the semicircle/half-sphere has a radius r that corresponds to the determined distance of the first communication module 502 from the respective second communication module 504. In this case, it is a semicircle/half-sphere because the first communication module cannot be located on the other side of the wall 706 or plane, and the circle/sphere is bisected by the plane. In combination with the known fixed displacement of the second communication modules 504 above the first communication module 502, the location 704 at which the two semicircles/halfspheres 702 overlap, can then be determined as the location of the first communication module 502.

In some examples, the location determining module 506 or the control system can communicate the determined location of the robot 122 back to the robot 122. This can be beneficial in examples in which the robot 122 monitors its own location as it traverses the automated storage and retrieval system.

The first communication module 502 can be powered by a main power system of the robot 122, wherein the main power system is a power system that powers the robot 122 to move on the grid 100. That is, the first communication module 502 can be connected to, and powered by, the main power system of the robot 122 (such as the main battery that powers the robot motor). In this way, additional components added to the robot 122 can be minimised and implementation of the first communication module 502 in the robot 122 can be simplified.

Alternatively, the first communication module 502 can be powered by an auxiliary power system at the robot 122, wherein the auxiliary power system is separate to a main power system of the robot. That is, a power system that is separate to the power system that powers the robot can be used to power the first communication module 502. In this way, if there is a power failure at the robot 122, the location monitoring can still be performed because the first communication module 502 is separately powered. This is useful because if robot 122 has a power failure and becomes stranded in the automated storage and retrieval system, the location of the robot 122 can still be determined to avoid collisions with other robots.

Alternatively, the first communication module 502 can be a passive RFID tag powered by energy transmitted from the second communication modules 504. That is, an energy from an incident signal from a second communication module 504 can be used to power a response transmission by the first communication module 502 (by RFID backscattering, for example). In this way, the first communication module 502 does not need its own power supply, and also does not rely on the main power supply of the robot 122. This can be beneficial in both simplifying the implementation of the first communication module 502 in the robot 122 and ensuring reliability of the location determining system in the event of a power failure at the robot 122.

In a second location determining approach, the second communication modules 504 can be configured to transmit signals to the first communication module 502. That is, second communication modules 504 can be transmitters and the first communication module 502 can be a receiver.

Typically, in such an arrangement, the location determining module 506 can be communicatively coupled to the first communication module 502 and configured to determine the location of the robot 122 based upon the signals received at the first communication module 502 from the second communication modules 504. In some such examples, the location determining module 506 can be arranged as a component at the robot 122, and can be configured to transmit the determined location the control system of the automated storage and retrieval system. In other examples, the location determining module 506 can be a separate component or a component of the control system, and the robot 122 can communicate information regarding the received signals to the location determining module 506.

Signals can be communicated from the second communication modules 504 to the first communication module 502. These signals can then be received at the first communication module 502. The location determining module 506, communicatively coupled to the first communication module 502, can then receive these signals and/or information based on these signals from the first communication module 502, and then use information based on these received signals to determine the location of the first communication module 502 and therefore the location of the robot 122.

Each signal can be unique to the second communication module 504 that sent it. In this way, the location determining module 506h can determine which second communication module 504 sent which respective signal.

Distances can be determined between the first communication module 502 and each second communication module 504 from which a signal has been received, based on the respective signal. For example, this can be brought about using received signal strength indicator (RSSI) information of the communicated signal.

The location determining module 506 can then determine the location of the first communication module 502, and hence robot 122, in a similar manner to that already described for the first location determining approach (e.g., by trilateration or bilateration as described with reference to Figs. 6 and 7), but using signals received from the second communication modules 504 at the first communication module 502, rather than signals received from the first communication module 502 at the second communication modules 504. For brevity, this detail is not repeated but it will be understood that the same principles apply.

In some examples, the location determining module 506 can communicate the determined location of the robot 122 to a control system of the robot. This can be beneficial in examples in which the robot 122 monitors its own location as it traverses the automated storage and retrieval system.

In both the first and second location determining approaches, the location determining module 506 can communicate the determined location to the control system (also referred to as a controller) of the automated storage and retrieval system. In some cases this can be brought about by a wireless or wired connection between the location determining module 506 and the control system, and in other cases it can be brought about by the location determining module 506 being a module of the control system.

The control system can be configured to verify whether the robot 122 is at the known location of the robot 122 based upon the determined location. The "known location" can be considered the location the control system expects the robot to be located based on its starting position and the movement instructions that have been sent to it. The "determined location" can be considered the actual location of the robot as determined in real-time by the location monitoring system. When there is a disagreement between the known location of the robot and the determined location of the robot, the control system can update the known location to the determined location. In response to updating the known location to the determined location, the control system can also perform a further action. The further action can comprise re-routing one or more robots in the automated storage and retrieval system.

The robot 122 for which the location has been determined can be re-routed to direct the robot back to its intended course and/or intended destination, and inhibit the robot 122 from travelling to an incorrect location for a storing/retrieving command.

If the robot 122 is at an unexpected location in the system, there is a risk of collision between robots. When the updated known location of the robot 122 is a location that is determined to be a location that could cause a collision with another robot (e.g., based on planned routes or positions of other robots), either the robot 122 for which the location has been determined, or the other robot or other robots, can be re-routed to avoid a collision.

As discussed, the second communication modules 504 are arranged at fixed positions relative to the automated storage and retrieval system and displaced from the grid 100 by a displacement that is greater than or equal to a maximum projection of the robot or robots from the grid. This displacement of the second communication modules 504 from the grid can be realised in different manners. Some such exemplary manners are now described.

In an example, the second communication modules 504 can be arranged in or on a lighting system. This lighting system can be positioned above the automated storage and retrieval system, and can be the lighting system of the room in which the automated storage and retrieval system is arranged, or a separate lighting system for the automated storage and retrieval system.

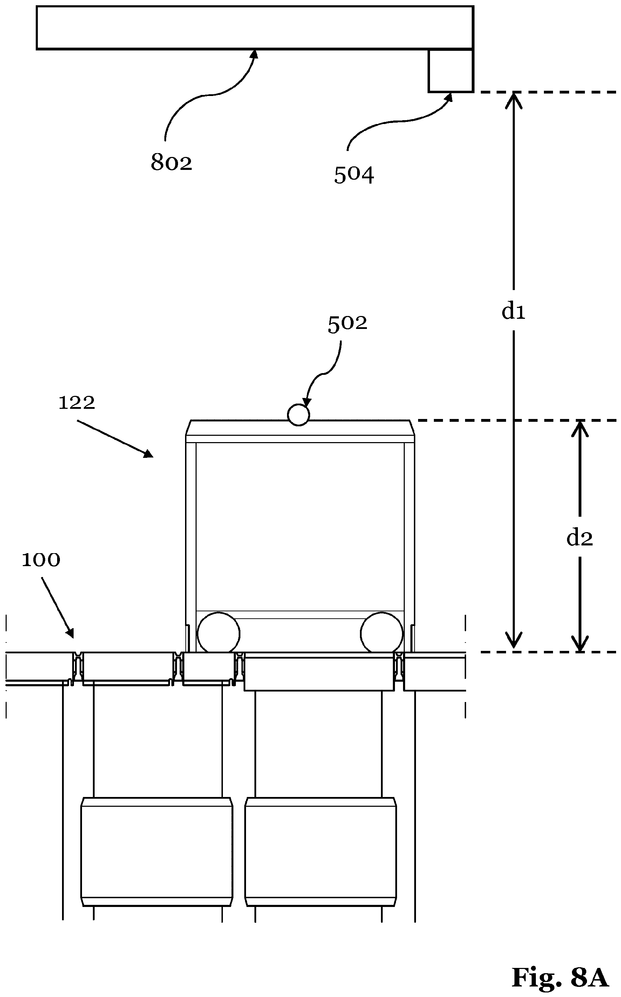

Fig. 8A shows a exemplary side-view diagram of a second communication module 504 arranged on a lighting system 802, above the grid 100. A robot 122 is positioned on the grid 100, and a first communication module 502 is arranged on the robot 122. The second communication module 504 is displaced above the grid by a distance d1 by virtue of its position on the lighting system 802. The maximum projection of the robot 122 from the grid 100 (i.e., the height of the robot 122 above the grid) is a distance d2. The distance d1 is greater than the distance d2. As such, the second communication module 504 is displaced from the grid 100 by a displacement that is greater than the maximum projection of the robot 122 from the grid 100.

In another example, the second communication modules 504 can be arranged in or on sidewalls of the automated storage and retrieval system. For example, these sidewalls can be a safety wall or fence that surrounds or partially surrounds the grid.

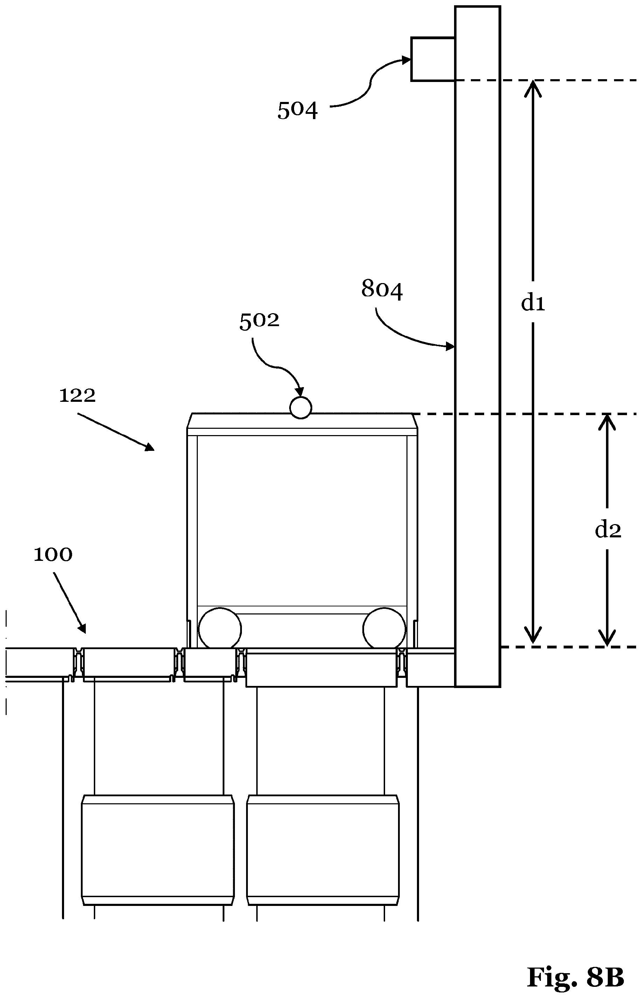

Fig. 8B shows a exemplary side-view diagram of a second communication module 504 arranged on a sidewall 804, above the grid 100. A robot 122 is positioned on the grid 100, and a first communication module 502 is arranged on the robot 122. The second communication module 504 is displaced above the grid by a distance d1 by virtue of its position on the sidewall 804. The maximum projection of the robot 122 from the grid 100 (i.e., the height of the robot 122 above the grid) is a distance d2. The distance d1 is greater than the distance d2. As such, the second communication module 504 is displaced from the grid 100 by a displacement that is greater than the maximum projection of the robot 122 from the grid 100.

In another example, the second communication modules 504 can be arranged in or an air conditioning system, or more specifically a heating, ventilation, and air conditioning, HVAC, system positioned above the grid 100.

In another example, the second communication modules 504 can be directly or indirectly affixed to a wall or walls of a room in which the automated storage and retrieval system is located.

In another example, the second communication modules 504 can be directly or indirectly affixed to a ceiling of a room in which the automated storage and retrieval system is located.

More generally, it can be considered that the second communication modules 504 can be arranged above the grid.

The second communication modules 504 can also be arranged in combinations of the preceding examples, and do not all need to be located in one configuration. For example, second communication modules 504 could be arranged in/on both a lighting structure and sidewalls of the grid.

In these examples, the storage grid 100 is accessed in a top-down approach, and the robots 122 move on the top of the grid 100. The second communication modules 504 can be considered to be arranged at fixed positions relative to the automated storage and retrieval system and vertically displaced from the grid 100 by a vertical displacement that is greater than or equal to a maximum projection (i.e., maximum height) of the one or more robots 122 on the grid 100.

In an alternative example, the storage grid can be accessed in a side-loading approach, rather than the top-down, and the robots can move on a side of the grid. In such an alternative example, the second communication modules can be at fixed location displaced from the grid in a horizontal direction, rather than a vertical direction, by a displacement that is greater than or equal to the maximum horizontal projection of the one or more robots from the grid.

The signals communicated between the first communication module 502 and the second communication modules 504 can be radio frequency or microwave frequency communication signals. Various communication protocols cam be used. For example, the communication can be carried out using 2.4 GHz communication, by a WiFi protocol, by telecommunications protocols such as 4G or 5G, unlicensed spectrum bands, Bluetooth or Bluetooth Low Energy (BLE), RFID and the like.

In an alternative to radio or microwave frequency communication, the second communication modules 504 can be lights configured to communicate with the first communication module 502 by transmitting visible light communication to the first communication module 502. That is, the lights themselves can be the second communication modules 504. This can be used in the second location determining approach (described above), wherein the second communication modules 504 can be configured to transmit signals to the first communication module 502.

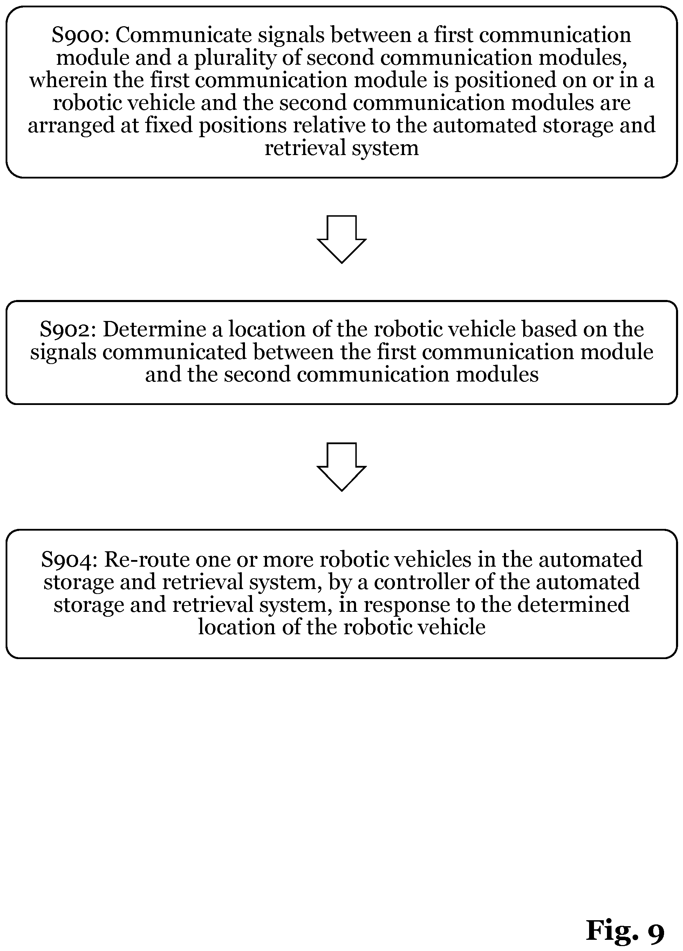

Fig. 9 is a flow chart illustrating an exemplary method of location determination corresponding to the above description. It will be understood that any of the features of the above description can be included in this method, but the detail is not repeated here for the sake of brevity.

At step S900, signals are communicated between a first communication module 502 and a plurality of second communication modules 504. The first communication module 502 is positioned on or in a robot 122 and the second communication modules 504 are arranged at fixed positions relative to the automated storage and retrieval system and displaced from the grid 100 by a displacement that is greater than or equal to a maximum projection of the robots 122 from the grid.

At step S902, a location of the robot 122 is determined, by a location determining module 506, based on the signals communicated between the first communication module 502 and the second communication modules 504.

Optionally, at step S904, in response to the determined location of the robot 122, a controller of the automated storage and retrieval system can re-route one or more robots in the automated storage and retrieval system.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A location monitoring system for monitoring the location of one or more robotic vehicles in an automated storage and retrieval system, the automated storage and retrieval system comprising a grid on which the one or more robotic vehicles move, and the location monitoring system comprising:
a first communication module configured to be positioned on or in a robotic vehicle of the one or more robotic vehicles;
a plurality of second communication modules configured to be arranged at fixed positions relative to the automated storage and retrieval system and displaced from the grid by a displacement that is greater than or equal to a maximum projection of the one or more robotic vehicles from the grid;
wherein the first communication module and the second communication modules are configured such that signals are communicated between the first communication module and the second communication modules; and
the location monitoring system further comprising a location determining module configured to determine a location of the robotic vehicle based on the signals communicated between the first communication module and the second communication modules.

2. The location monitoring system of claim 1, wherein the first communication module is configured to transmit the signals to the second communication modules, wherein the location determining module is communicatively coupled to the second communication modules.

3. The location monitoring system of claim 2, wherein the location determining module is configured to communicate the determined location of the robotic vehicle to a controller of the automated storage and retrieval system, or wherein the location determining module is a component of the controller; and
the controller is configured to verify and/or update a known location of the robot based upon the determined location.

4. The location monitoring system of claim 2 or claim 3, wherein the first communication module is powered by a main power system of the robotic vehicle, wherein the main power system is a power system that powers the robotic vehicle to move on the grid.

5. The location monitoring system of claim 2 or claim 3, wherein the first communication module is powered by an auxiliary power system of the robotic vehicle, wherein the auxiliary power system is separate to a main power system of the robotic vehicle that powers the robotic vehicle to move on the grid.

6. The location monitoring system of claim 2 or claim 3, wherein the first communication module is a passive RFID tag powered by energy transmitted from the second communication modules.

7. The location monitoring system of claim 1, wherein the second communication modules are configured to transmit the signals to the first communication module, wherein the location determining module is communicatively coupled to the first communication module.

8. The location monitoring system of claim 7, wherein the robotic vehicle comprises a communication interface configured to communicate with a controller of the automated storage and retrieval system, wherein the location determining module is configured to send the determined location of the robotic vehicle on the grid to the controller by the communication interface, and the controller is configured to receive the determined location and to verify and/or update a known location of the robot based upon the determined location.

9. The location monitoring system of claim 7 or claim 8, wherein the second communication modules are lights configured to communicate with the first communication module by transmitting visible light communication to the first communication module.

10. The location monitoring system of any one of claims 1 to 8, wherein the signals communicated between the first communication module and the second communication modules are radio frequency or microwave frequency communication signals.

11. The location monitoring system of claim 3 or claim 8, wherein the controller is configured to re-route one or more robotic vehicles in the automated storage and retrieval system based upon the updated known location of the robotic vehicle.

12. The location monitoring system of any preceding claim, wherein the second communication modules are configured to be arranged in one or more of the following:
above the grid;
in or on a sidewall that at least partially surrounds the grid;
in or on a lighting system positioned above the grid;
in or on a heating, ventilation, and air conditioning, HVAC, system positioned above the grid;
directly or indirectly affixed to a wall or walls of a room in which the automated storage and retrieval system is located; or
directly or indirectly affixed to a ceiling of a room in which the automated storage and retrieval system is located.

13. A robotic vehicle configured for use in an automated storage and retrieval system comprising a grid on which the robot moves, wherein the robotic vehicle comprises:
a first communication module positioned on or in the robotic vehicle;
wherein the first communication module is configured such that signals are communicated between the first communication module and a plurality of second communication modules arranged at fixed positions relative to the automated storage and retrieval system and displaced from the grid by a displacement that is greater than or equal to a maximum projection of the one or more robotic vehicles from the grid; and
the robotic vehicle further comprises a location determining module configured to determine a location of the robotic vehicle based on the signals communicated between the first communication module and the second communication modules.

14. A location monitoring method for monitoring the location of one or more robotic vehicles in an automated storage and retrieval system, the automated storage and retrieval system comprising a grid on which the one or more robotic vehicles move, wherein the method comprises:
communicating signals between a first communication module and a plurality of second communication modules, wherein the first communication module is positioned on or in a robotic vehicle of the one or more robotic vehicles and the second communication modules are arranged at fixed positions relative to the automated storage and retrieval system and displaced from the grid by a displacement that is greater than or equal to a maximum projection of the one or more robotic vehicles from the grid; and
determining, by a location determining module, a location of the robotic vehicle based on the signals communicated between the first communication module and the second communication modules.

15. A non-transitory computer-readable medium storing instructions that when executed by one or more processors cause the one or more processers to:
receive signals communicated between a first communication module and a plurality of second communication modules, wherein the first communication module is positioned on or in a robotic vehicle of one or more robotic vehicles in an automated storage and retrieval system that comprises a grid on which the one or more robotic vehicles move, and the second communication modules are arranged at fixed positions relative to the automated storage and retrieval system and displaced from the grid by a displacement that is greater than or equal to a maximum projection of the one or more robotic vehicles from the grid; and
determine a location of the robotic vehicle based on the signals communicated between the first communication module and the second communication modules.
